# EUROPÄISCHE PATENTSCHRIFT

(11) **EP 0 620 148 B1**
(45) Veröffentlichungstag und Bekanntmachung des Hinweises auf die Patenterteilung: **28.06.2000**
(21) Anmeldenummer: 94105303.5
(22) Anmeldetag: 06.04.1994
(51) Int. Cl.: B62D 33/04, B60P 7/06

(54) **Aufbau für die Ladefläche eines Fahrzeuges mit Tragrohr**
Vehicle loading surface structure with a support tube
Structure de plateforme de chargement d'un véhicule avec un tube support

(30) Priorität: 14.04.1993 DE 9305610 U
(43) Veröffentlichungstag der Anmeldung: 19.10.1994
(73) Patentinhaber: ANCRA Jungfalk GmbH, D-78234 Engen (DE)
(72) Erfinder: Koller, Karl, CH-8260 Stein am Rhein (CH)
(74) Vertreter: Hiebsch, Gerhard F., Dipl.-Ing.

(56) Entgegenhaltungen:
- EP-A- 0 005 960
- EP-A- 0 159 394
- WO-A-92/00868
- BE-A- 1 005 536
- DE-U- 9 006 685
- GB-A- 2 266 706
- US-A- 2 199 981
- US-A- 3 477 392
- US-A- 3 897 971
- US-A- 3 911 832
- US-A- 4 702 653

## Beschreibung

Die Erfindung betrifft einen Aufbau für die Ladefläche eines Fahrzeuges mit wenigstens einem an Seitenwänden in Abstand zur Ladefläche etwa horizontal vorgesehenen Paar von Führungsschienen, an die endwärtige Verbindungsorgane eines in Betriebsstellung zwischen ihnen verlaufenden Tragelementes anschließbar sind, wobei die Länge des Tragelementes etwa dem Abstand der beiden Führungsschienen voneinander entspricht.

Einen Aufbau dieser Art offenbart beispielhaft die US-A-3 477 392; in einem Kastenaufbau für Eisenbahnwaggons oder Lastwagen werden -- etwa mittels eines Gabelstaplers --flächige Paneele zur Unterteilung des Aufbauquerschnitts horizontal oder vertikal eingefügt. In jedem Paneel verlaufen Gestänge zum axialen Verschieben von stirnseitig an der Paneelaußenseite angeordneten Bolzen, die jeweils mit einem auf einen horizontal abragenden Schenkel der Führungsschiene winkelförmigen Querschnitts auflegbaren Winkelstück ausgestattet sind.

Nach der US-A-3 897 971 sind an einer horizontal an einer Seitenwand eines Transporters verlaufenden Halteleiste Paare laschenartiger Stabprofile in ortsfesten Lagerprofilen durch querende Achsbolzen angelenkt. Diese Stabprofile sind andernends von jeweils einem Achsbolzen einer an ihnen pendelbar aufgehängten Plattform durchsetzt. Diese Plattform liegt in horizontaler Betriebsstellung mit einem endwärtigen Hakenprofil einem Rinnenprofil des Transporters auf, die Stabprofile verlaufen dann innerhalb der Plattform, die an jene die Halteleiste mit den Lagerprofilen aufweisende Seitenwand in eine Ruhelage herangeklappt werden.

In Kenntnis dieses Stand der Technik hat sich der Erfinder die Aufgabe gestellt, eingangs beschriebene Aufbauten von Transportfahrzeugen so zu gestalten, dass einfach herstellbare Tragprofile für einen Zwischenboden problemlos demontierbar an den Führungsschienen positioniert sowie aus einer Betriebsstellung in eine Ruhelage überführt werden können.

Zur Lösung dieser Aufgabe führt die Lehre des unabhängigen Anspruches; die Unteransprüche erfassen günstige Weiterbildungen.

Erfindungsgemäß wird das als Tragrohr oder Tragprofil ausgebildete Tragelement in Abstand zu einem Profilende mit wenigstens einem strangartigen Lenker durch ein Gelenk verbunden und der Lenker andernends mittels eines weiteren Gelenkes an die eine Führungsschiene angeschlossen, wobei das Tragprofil um sein Gelenk und der Lenker um das weitere Gelenk aus der Betriebsstellung in eine Ruhelage klappbar sowie an der Führungsschiene verschiebbar ausgebildet sind.

Nach einem weiteren Merkmal der Erfindung soll das weitere Gelenk anderseits an einem die Führungsschiene teilweise umfassenden und an ihr fixierbar vorgesehenen Profil -- bevorzugt C-förmigen Querschnittes -- klammernd festlegbar sein.

Das Tragprofil kann erfindungsgemäß als Tragrohr mit wenigstens einem parallel angeschlossenen gleichartigen Tragrohr einen Tragbalken bilden und der strangartige Lenker als Rohrstück zwischen dem Tragrohrpaar verlaufen. Bei einer weiteren bevorzugten Ausführungsform ist das Tragprofil ein Kastenprofil mit seitlich überkragendem Obergurt ausgebildet, an dessen Profilseitenwänden jeweils ein strangartiger Lenker angelenkt ist.

Vorteilhafterweise ragt von dem Lenker oder dem Rohrstück an seinem dem klammernden Profil fernen Ende ein Querbolzen ab, der als Gelenkachse in einem axialen Langloch des Tragprofils bzw. der/des Tragrohre/s geführt und durch diese Lagerung relativ zum Tragprofil od. dgl. verschiebbar ist. Es ist wählbar, ob von dieser Paarung Langloch/Querbolzen das Langloch oder der Querbolzen dem Tragprofil zugeordnet ist.

Als günstig hat es sich zudem erwiesen, daß das Tragprofil bzw. die Tragrohre als Verbindungsorgan wenigstens ein Hakenprofil aufweist/aufweisen, das in eine aufwärts gerichtete Längsnut der Führungsschiene haltend einzusetzen und durch Anheben aus ihr zu entfernen ist. Um das Tragprofil in seiner Betriebsstellung zu sichern, ist an jenem Hakenprofil und/oder dem C-förmigen Profil des Rohrstücks oder Lenkers jeweils ein axial bewegbarer Bolzen vorgesehen, dessen freies Ende unter Federdruck in eine Bohrung oder Ausnehmung der Führungsschiene einsetzbar ist.

In horizontaler Betriebsstellung liegt das Rohrstück an den beiden Gelenkachsen und wenigstens einem es übergreifenden Anschlagsteg zwischen den Tragrohren parallel zu diesen fest.

Der Anschlagsteg soll außerhalb eines Schwenkkreises des freien Endes des Rohrstückes um den Querbolzen vorgesehen sein, wenn dieser an dem dem Anschlagsteg nahen Ende des Langloches des Rohrstückes lagert.

Im Rahmen der Erfindung ist das Rohrstück bzw. der Lenker um 180° aus der Betriebsstellung zwischen die Tragrohre bzw. an das Tragprofil klappbar und sein freies Ende an den Anschlagsteg bzw. den Obergurt des Kastenprofils anlegbar. In dieser Ruhelage des Rohrstückes bzw. des Lenkers lagert der Querbolzen an dem dem Anschlagsteg fernen Ende des Langloches des Rohrstückes.

Im Rohrstück ist ein axial verschieblicher oder ein schwenkbarer Sicherungsbolzen durch einen Kraftspeicher in eine Bohrung der Führungsschiene gedrückt. Der Sicherungsbolzen durchsetzt das C-förmige Profil des Rohrstückes oder Lenkers, welches beidseits von Hakenprofilen flankiert ist.

Im Rahmen der Erfindung besteht also das zwischen den Führungsschienen aufspannbare Tragprofil aus einer Trageinheit mit angelenktem Lenker. Jenes Tragprofil, auch Tragbalken genannt, wird in Betriebsstellung quer zur Fahrzeuglängsachse und waagrecht an den Führungsschienen befestigt und verriegelt oder ist in Ruhestellung an eine der Seitenwände geklappt und kann auch so verriegelt werden. Dieser Tragbalken kann nach dem Lösen der Verriegelungen in Fahrzeuglängsrichtung entlang den Führungsschienen verschoben und/oder um eine Gelenkeinheit gedreht werden; er wird mittels des Lenkers, der sowohl an der Gelenkeinheit als auch über ein weiteres Gelenk an die Trageinheit angeschlossen ist, geführt.

Nach einem weiteren Merkmal der Erfndung liegt der Tragbalken in Betriebsstellung auf einer Seite der Gelenkeinheit und auf der gegenüberliegenden Seite der Führungsschiene auf, wobei durch Profile eine formschlüssige Verbindung zwischen Führungsschienen und Tragbalken erreicht wird, die ein Verschieben quer zur Fahrzeuglängsachse verhindern.

Die Gelenkeinheit wird erfindungsgemäß als Teil der Trageinheit mittels eines Profils formschlüssig an einer Führungsschiene befestigt, so daß auch vertikale Verschiebungen hintangehalten werden. Außerdem sperren beidseitig angebrachte Verriegelungsmechanismen den Tragbalken gegen ein Verschieben in Fahrzeuglängsrichtung.

Insgesamt ergibt sich ein in seiner horizontalen Betriebsstellung sicherer und hoch belastbarer Tandembalken, der ohne Aufwand in seine vertikale Ruhelage geklappt werden kann.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf die Ladefläche eines Fahrzeuges mit Kastenaufbau;
- Fig. 2:: einen vergrößerten Querschnitt durch Fig. 1 nach deren Linie II-II mit einem Halteprofil in horizontaler Betriebsstellung sowie in vertikaler Ruhelage;
- Fig. 3, 4:: vergrößerte Ausschnitte aus Fig. 2;
- Fig. 5:: eine Schrägsicht auf einen Abschnitt einer Führungsschiene;
- Fig. 6:: eine Seitenansicht des Halteprofils;
- Fig. 7:: die Draufsicht auf das Halteprofil;
- Fig. 8:: den Längsschnitt durch Fig. 7 nach deren Linie VIII-VIII;
- Fig. 9:: einen Vergrößerten Ausschnitt aus Fig. 8 nach deren Pfeil IX;
- Fig. 10:: einen vergrößerten Ausschnitt aus Fig. 8 nach deren Pfeil X;
- Fig. 11:: ein vergrößertes Detail aus Fig. 2 in anderer Betriebsstellung.
- Fig. 12:: eine Seitenansicht eines weiteren Halteprofils;
- Fig. 13:: die Draufsicht auf das Halteprofil der Fig. 12;
- Fig. 14,15:: vergrößerte und teilweise geschnittene Details aus Fig. 12;
- Fig. 16:: ein vergrößerter Ausschnitt aus Fig. 12 mit dieser gegenüber lageveränderten Teilen;
- Fig. 17:: ein Halteprofil im Querschnitt;
- Fig. 18:: die Draufsicht auf Fig. 17.

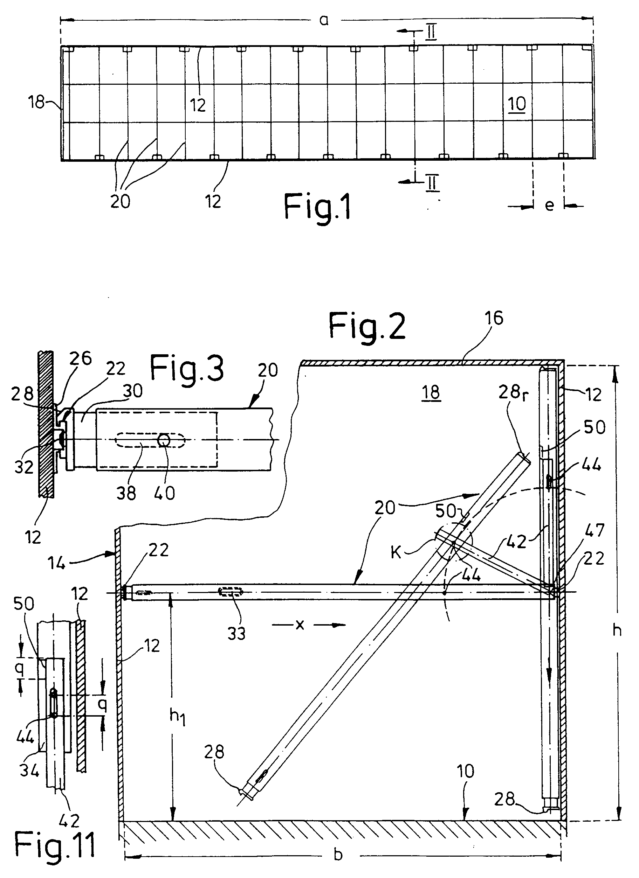

Die Ladefläche 10 von beispielsweise etwa 12 m (Länge a) eines nicht weiter dargestellten Fahrzeuges ist von Seitenwänden 12 eines Kastenaufbaues 14 der lichten Innenhöhe h von 250 cm flankiert, dessen Dach 16 in Fig. 2 zu erkennen und dessen Kastenstirnwand hier mit 18 bezeichnet ist. Die Aufbauinnenbreite b mißt ebenfalls etwa 250 cm.

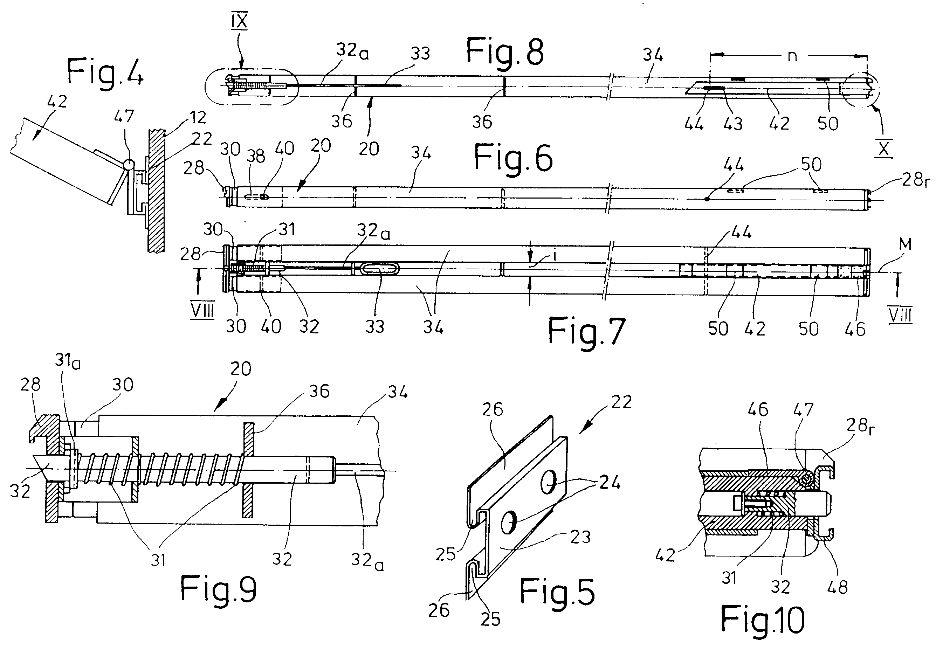

In Horizontalabständen e von etwa 65 cm queren die Ladefläche 10 sog. Tandem- oder Doppelstockbalken 20 als Halteprofile für einen Zwischenboden od.dgl., die in Betriebsstellung in einem Bodenabstand h1 von etwa halber Innenhöhe h beidends in horizontalen Führungsschienen 22 lagern. Jede Führungsschiene 22 weist -- wie insbesondere Fig. 5 zeigt -- beidseits einer hohlen Mittelleiste 23, deren Hauptfläche mit einer Galerie von Bohrungen 24 versehen ist, jeweils eine Längsnut 25 vertikalen Querschnitts auf; beide Längsnuten 25 sind querschnittlich gegenläufig gerichtet und von einem an der Seitenwand 12 festliegenden Sockelstreifen 26 begrenzt.

In die obere Längsnut 25 der in Fig. 2 linken Führungsschiene 22 greift in Betriebsstellung des Doppelstockbalkens 20 ein Hakenprofil 28 ein, das endwärts an Teleskopzapfen 30 des Doppelstockbalkens 20 festliegt und von einem -- durch eine Schraubenfeder 31 belasteten -- Axialbolzen 32 durchgriffen wird; dieser sitzt in einer der Bohrungen 24 der Führungsschiene 22.

Die Ausführung des Doppelstockbalkens 20 der Fig. 7 setzt sich aus zwei Tragrohren 34 zusammen, die in einem Abstand i voneinander parallel verlaufen und einends jeweils mit einem Teleskopzapfen 30 an das plattenartige gemeinsame Hakenprofil 28 angeschlossen sind. Der erwähnte Axialbolzen 32 befindet sich mit der ihn umfangenden Schraubenfeder 31 zwischen den beiden Tragrohren 34, und sein Verlängerungsstab 32a endet in einer Zugöse 33. Zudem durchsetzt der Axialbolzen 32 -- der in der Mittelachse M des Doppelstock- oder Tandembalkens 20 liegt -- eine Querplatte 36, welche die beiden Tragrohre 34 untereinander verbindet. Die Schraubenfeder 31 des Axialbolzens 32 stützt sich einends gegen dessen Kragen 31a und andernends gegen die Querplatte 36 ab.

Vor allem in Fig. 3, 6 sind achsparallele Langlochpaare in den Tragrohren 34 zu erkennen als Führungskulissen 38 für Querstäbe 40 jener Teleskopzapfen 30, die mit ihrem Hakenprofil 28 eine in Draufsicht etwa U-förmige Einheit bilden.

Auch am anderen -- in der Zeichnung rechten -- Ende des Doppelstockbalkens 20 ist ein federbelasteter Axialbolzen 32 vorgesehen, der hier jedoch in einem zwischen Tragrohren 34 angebrachten Rohrstück 42 lagert; letzteres ist durch einen beidends in den Tragrohren 34 sitzenden und ein axiales Langloch 43 des Rohrstückes 42 durchgreifenden Querbolzen 44 in Abstand n zum benachbarten Hakenprofil 28r angelenkt, wobei dieser Abstand n etwa ein Viertel der erwähnten Aufbauinnenbreite b mißt.

Andernends ist das Rohrstück 42 über ein Scharnier 46 mit einem C-Profil 48 verbunden, dessen Vertikalquerschnitt gemäß Fig. 10 beidseits des Axialbolzens 32 ein Rinnenstück bildet.

Von diesen ist jedes in eine Längsnut 25 der Führungsschiene 22 einsetzbar, d.h. das C-Profil 48 wird klammernd an der Führungsschiene 22 gehalten. In Draufsicht ist beidseits des C-Profils 48 jeweils ein Hakenprofil 28r vorgesehen.

In horizontaler Betriebsstellung des Doppelstockbalkens 20 bildet dieser mit dem von Anschlagstegen 50 übergriffenen und durch diese an den Querbolzen 44 sowie den Gelenkbolzen 47 gehaltenen Rohrstück 42 eine horizontale Auflage. Um ihn dann aus dieser Betriebsstellung zu entfernen, wird zuerst die Zugöse 33 in Öffnungsrichtung x geführt und gleichzeitig das in Fig. 2 linke Hakenprofil 28 durch Anheben des Doppelstockbalkens 20 von der Führungsschiene 22 gelöst.

Nun wird das linke Balkenende abgesenkt, wobei sich der Doppelstockbalken 20 um den Querbolzen 44 dreht; die rechten Hakenprofile 28r verlassen die rechte Führungsschiene 22 nach oben hin und werden dachwärts angehoben. Das beidends angelenkte Rohrstück 42 bildet einen Lenker zwischen der rechten Führungsschiene 22 und dem sich der rechten Seitenwand 12 nähernden Doppelstockbalken 20; dieser dreht sich um den Querbolzen 44, während das wandseitige Ende des Rohrstückes 42 um den Gelenkbolzen 47 geschwenkt wird.

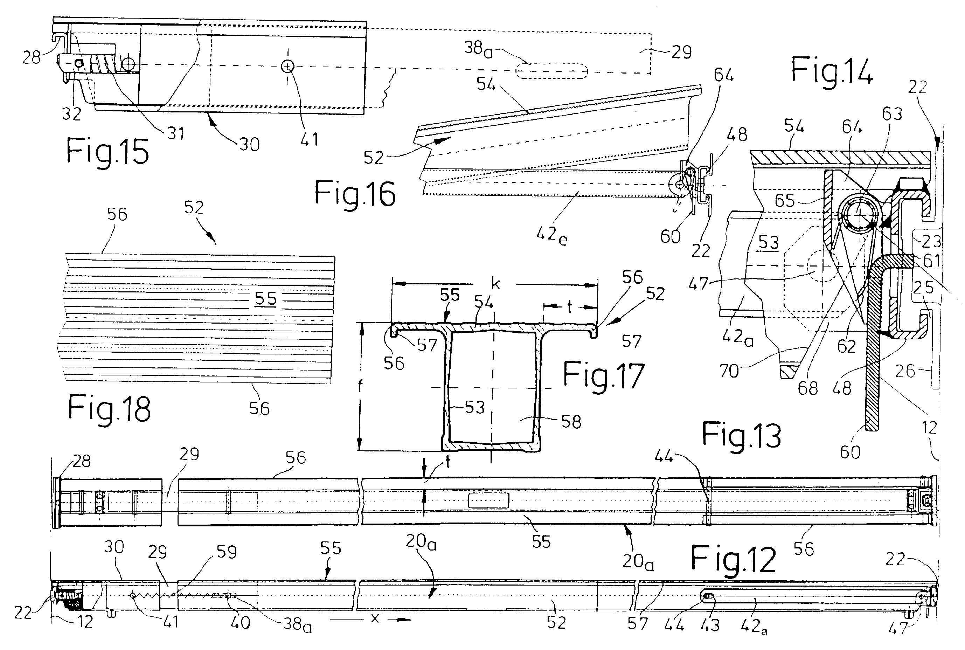

In der in Fig. 2 skizzierten Vertikalstellung liegt der Doppelstockbalken 20 in seiner gesamten Länge der Seitenwand 12 etwa an, und das Rohrstück 42 verläuft dann zwischen den Tragrohren 34 vom Querbolzen 44 bis zur Führungsschiene 22, an der es durch das C-Profil 48 gehalten wird. Nun gleitet der Querbolzen 44 im Langloch 43 -- und damit der Doppelstockbalken 20 -- um ein Maß q abwärts, wobei der gelenknahe Anschlagsteg 50 neben das Vertikale Rohrstück 42 gelangt und so das System 34/42 in vertikaler Ruhelage fixiert. In Fig. 2 ist dieser gelenknahe Anschlagsteg 50, der unmittelbar neben der kreisförmigen Schwenkkontur K des benachbarten Rohrstückendes vorgesehen wird, außerhalb dieser Ruhe- oder Fixierlage wiedergegeben, in Fig. 11 in letzterer.

Beim Ausführungsbeispiel der Fig. 12ff wird ein stranggepreßtes Tandemprofil 52 als Hauptelement des Doppelstockbalkens 20a eingesetzt. Dieses Tandemprofil 52 ist ein Kastenprofil der Höhe f Von etwa 90 mm mit beidseits der Profilseitenwände 53 symmetrisch auskragendem Obergurt 54 der Länge k von etwa 140 mm mit profilierter Oberfläche 55. An den Längskanten 56 des Obergurtes 54 verlaufen querschnittlich abwärts gekrümmte Hakenleisten.

Der Teleskopzapfen 30 lagert hier mit einem Einschubende 29 im Kastenraum 58 des Tandemprofils 52.

Nach dem freien Ende des Einschubendes 29 des Teleskopzapfens 30 ist ein Langlochpaar 38a für den hier im Tandemprofil 52 sitzenden Querstab 40 vorgesehen.

Zwischen letzterem und einem im vorderen Ende des Teleskopzapfens 30 festliegenden Querbolzens 41 spannt sich eine Schraubenfeder 59 od. dgl. Kraftspeicher. Dank dieser Ausbildung ist die effektive Länge des Tandemprofils 52 begrenzt anpaßbar.

Am anderen Ende des Tandemprofils 52 verlaufen unterhalb der beiden auskragenden Abschnitte der Kragbreite t des Obergurtes 54 zwei -- dank jeweils eines Langloches 43 an dem erwähnten Querbolzen 44 begrenzt verschiebliche -- Lenker 42a, welche -- wie zu den anderen Ausführungsbeispielen beschrieben -- an das C-Profil 48 angelenkt sind. Diesem ist insbesondere gemäß Fig. 14 ein Fixierhaken 60 vorgesetzt, dessen Hakenkopf 61 in die in Fig. 5 Verdeutlichten Bohrungen 24 eingreifen kann. Auf ihm lastet eine Stabfeder 62. deren Windungen einen Achszapfen 63 zwischen zwei Haltewangen 64 des C-Profils 48 umfangen. Die Haltewagen 64 sind mit einem Quersteg 65 einstückig, an den sich ein Arm der Stabfeder 62 abstützt.

Die Drehung der Lenker 42a um ihre wandseitig an Laschen 68 vorgesehenen Gelenkbolzen 47 und das Klappen des endwärts bei 70 schräg abgelängten Tandemprofils 52 an die Seitenwand 12 geschieht wie zu Fig. 2 beschrieben.

## Patentansprüche

1. Aufbau für die Ladefläche eines Fahrzeuges mit wenigstens einem an Seitenwänden in Abstand zur Ladefläche etwa horizontal vorgesehenen Paar von Führungsschienen, an die endwärtige Verbindungsorgane eines zwischen ihnen in Betriebsstellung verlaufenden Tragelements anschließbar sind, wobei die Länge des gegenüber den Führungsschienen ortsveränderlichen Tragelements etwa dem Abstand der beiden Führungsschienen voneinander entspricht,
dadurch gekennzeichnet,
dass das Tragelement als Tragrohr oder Tragprofil (20, 34, 52) ausgebildet in Abstand (n) zu einem Profilende (48) mit wenigstens einem strangartigen Lenker (42, 42a) durch ein Gelenk (43, 44) verbunden und der Lenker andernends mittels eines weiteren Gelenkes (46, 47) an der einen Führungsschiene (22) gelagert ist, wobei das Tragprofil (20, 34, 52) um sein Gelenk (44) und der Lenker (42, 42a) um das weitere Gelenk (46, 47) aus der Betriebsstellung in eine Ruhelage klappbar sowie an der Führungsschiene verschiebbar ausgebildet sind.

2. Aufbau nach Anspruch 1, dadurch gekennzeichnet, dass das weitere Gelenk (46, 47) an einem die Führungsschiene (22) teilweise umfassenden und an ihr fixierbar vorgesehenen Profil (48) festliegt.

3. Aufbau nach Anspruch 1 oder 2, dadurch gekennzeichnet, dass das Tragprofil (34) als Tragrohr mit wenigstens einem parallel angeschlossenen Tragrohr einen Tragbalken (20) bildet und der strangartige Lenker als Rohrstück (42) zwischen den beiden Tragrohren verläuft.

4. Aufbau nach Anspruch 1 oder 2, dadurch gekennzeichnet, dass das Tragprofil (52) ein Kastenprofil mit seitlich abkragendem Obergurt (54) ist, an dessen Profilseitenwänden (53) jeweils einer der strangartigen Lenker (42a) angelenkt ist.

5. Aufbau nach einem der Ansprüche 1 bis 4, dadurch gekennzeichnet, dass von dem Lenker (42a) oder dem Rohrstück (42) an seinem der Führungsschiene (22) fernen Ende ein Querbolzen (44) abragt, der als Gelenkachse in einem axialen Langloch (43) des Tragprofils (20,34,52) geführt ist, oder dass in dem Lenker (42a) oder dem Rohrstück (42) an seinem der Führungsschiene (22) fernen Ende ein Langloch (43) für einen Querbolzen (44) des Tragprofils (52) oder der/des Tragrohre/s (34) vorgesehen ist.

6. Aufbau nach einem der Ansprüche 1 bis 5, dadurch gekennzeichnet, dass das Tragprofil (52) bzw. die Tragrohre (34) endwärts als Verbindungsorgan wenigstens ein Hakenprofil (28, 28r) aufweist/aufweisen, das in eine aufwärts gerichtete Längsnut (25) der anderen Führungsschiene (22) haltend einsetzbar sowie an wenigstens einen Teleskopzapfen (30) des Tragprofils (52) bzw. der/des Tragrohre/s (34) vorgesehen ist.

7. Aufbau nach Anspruch 6, dadurch gekennzeichnet, dass der Teleskopzapfen (30) im Kastenraum (58) des Tragprofils (52) verschieblich lagert, insbesondere mit dem Tragprofil (52) bzw. dem/den Tragrohr/en durch eine Paarung aus Langloch (38, 38a) und Querzapfen (40) verschieblich verbunden ist.

8. Aufbau nach einem der Ansprüche 2 bis 7, dadurch gekennzeichnet, dass die Eührungsschiene (22) zwei querschnittlich gegenläufige Längsnuten (25) aufweist und das mit dem Gelenk (46, 47) versehene Profil (48) des Lenkers (42a) oder des Rohrstücks (42) mit C-förmigem Querschnitt in diese eingreift.

9. Aufbau nach einem der Ansprüche 6 bis 8, dadurch gekennzeichnet, dass an dem Hakenprofil (28) des Teleskopzapfens (30) und/oder dem C-förmigen Profil (48) des Rohrstücks (42) oder Lenkers (42a) ein axial bewegbarer Bolzen (32) oder ein kippbarer Fixierhaken (60,61) vorgesehen und dessen freies Ende in eine Bohrung (24) der Führungsschiene (22) einsetzbar ist.

10. Aufbau nach Anspruch 9, dadurch gekennzeichnet, dass der Fixierhaken (60, 61) oder der Bolzen (32) am C-förmigen Profil (48) des Rohrstückes (42) oder Lenkers (42a) dieses/diesen als Sicherungsbolzen durchsetzt und bevorzugt das C-förmige Profil beidseits von Hakenprofilen (28r) flankiert ist.

11. Aufbau nach Anspruch 10, dadurch gekennzeichnet, dass der Sicherungsbolzen (32, 60, 61) am Rohrstück (42) oder Lenker (42a) durch einen Kraftspeicher (31, 62) in die Bohrung (24) der Führungsschiene (22) gedrückt ist.

12. Aufbau nach einem der Ansprüche 1 bis 11, dadurch gekennzeichnet, dass das Rohrstück (42) bzw. der Lenker (42a) um 180° aus der Betriebsstellung zwischen die Tragrohre (34) bzw. an das Tragprofil (52) in die Ruhelage klappbar und sein freies Ende an den Anschlagsteg (50) bzw. den Obergurt (54) anlegbar ist.

13. Aufbau nach einem der Ansprüche 3 bis 12, dadurch gekennzeichnet, dass in horizontaler Betriebsstellung das Rohrstück (42) an den beiden Gelenkachsen (44, 47) und wenigstens einem es übergreifenden Anschlagsteg (50) zwischen den Tragrohren (34) parallel zu diesem festliegt.

14. Aufbau nach Anspruch 12 oder 13, dadurch gekennzeichnet, dass der Anschlagsteg (50) außerhalb eines Schwenkkreises (K) des freien Endes des Rohrstückes (42) um den Querbolzen (44) vorgesehen ist und dieser an dem dem Anschlagsteg nahen Ende des Langloches (43) des Rohrstückes lagert.

15. Aufbau nach einem der Ansprüche 12 bis 14, dadurch gekennzeichnet, dass in Ruhelage des Rohrstückes (42) der Querbolzen (44) an dem dem Anschlagsteg (50) fernen Ende des Langloches (43) des Rohrstückes lagert.

## Claims

1. Body structure for the loading surface of a vehicle with at least one pair of guide rails provided approximately horizontally on side walls at a distance from the loading surface and to which end connecting members of a supporting element extending between them in the operating position can be connected, the length of the supporting element movable relative to the guide rails corresponding approximately to the distance between the two guide rails, characterised in that the supporting element in the form of a supporting tube or supporting profile (20, 34, 52) is connected at a distance (n) from one profile end (48) to at least one strand-like link (42, 42a) by means of a joint (43, 44) and the link is supported at the other end by means of another joint (46, 47) on one guide rail (22), the supporting profile (20, 34, 52) being pivotable about its joint (44) and the link (42, 42a) about the other joint (46, 47) from the operating position into a rest position and being displaceable on the guide rail.

2. Body structure according to claim 1, characterised in that the other joint (46, 47) is secured to a profile (48) partially embracing the guide rail (22) and provided fixably thereon.

3. Body structure according to claim 1 or claim 2, characterised in that the supporting profile (34) in the form of a supporting tube forms a supporting beam (20) together with at least one supporting tube connected in parallel therewith and the strand-like link in the form of tube section (42) extends between the two supporting tubes.

4. Body structure according to claim 1 or claim 2, characterised in that the supporting profile (52) is a box profile with a laterally projecting top flange (54) on to the profile side walls (53) of which respective strand-like links (42a) are hinged.

5. Body structure according to one of claims 1 to 4, characterised in that a transverse bolt (44) projects from the end of the link (42a) or the tube section (42) remote from the guide rail (22) and is guided as a joint axis in an axial elongated hole (43) in the supporting profile (20, 34, 52), or that an elongated hole (43) for a transverse bolt (44) of the supporting profile (52) or the supporting tube/s (34) is provided on the end of the link (42a) or the tube section (42) remote from the guide rail (22).

6. Body structure according to one of claims 1 to 5, characterised in that the supporting profile (52) or the supporting tubes (34) is/are provided at its/their end/s with at least one hook profile (28, 28r) as a connecting member which can be fixedly inserted into an upwardly directed longitudinal groove (25) in the other guide rail (22) and is provided on at least one telescopic pin (30) of the supporting profile (52) or the supporting tube/s (34).

7. Body structure according to claim 6, characterised in that the telescopic pin (30) is displaceably supported in the box space (58) of the supporting profile (52), in particular displaceably connected to the supporting profile (52) or the supporting tube/s by a pair consisting of the elongated hole (38, 38a) and the transverse pin (40).

8. Body structure according to one of claims 2 to 7, characterised in that the guide rail (22) has two longitudinal grooves (25) extending in opposite directions in cross section and the profile (48) of the link (42a) or the tube section (42) provided with the joint (46, 47) engages therein with a C-shaped cross section.

9. Body structure according to one of claims 6 to 8, characterised in that an axially movable bolt (32) or a tiltable fixing hook (60, 61) is provided on the hook profile (28) of the telescopic pin (30) and/or the C-shaped profile (48) of the tube section (42) or link (42a) and its free end can be inserted into a bore (24) in the guide rail (22).

10. Body structure according to claim 9, characterised in that the fixing hook (60, 61) or the bolt (32) on the C-shaped profile (48) of the tube section (42) or link (42a) traverses the latter as a locking bolt and the C-shaped profile is preferably flanked on both sides by hook profiles (28r).

11. Body structure according to claim 10, characterised in that the locking bolt (32, 60, 61) on the tube section (42) or link (42a) is pressed into the bore (24) in the guide rail (22) by an energy accumulator (31, 62).

12. Body structure according to one of claims 1 to 11, characterised in that the tube section (42) or the link (42a) can be pivoted through 180° from the operating position between the supporting tubes (34) or towards the supporting profile (52) into the rest position and its free end can be applied to the stop web (50) or the top flange (54).

13. Body structure according to one of claims 3 to 12, characterised in that, in the horizontal operating position, the tube section (42) is secured to the two joint axes (44, 47) and at least one stop web (50) embracing it between the supporting tubes (34) parallel thereto.

14. Body structure according to claim 12 or claim 13, characterised in that the stop web (50) is provided outside a swivelling circle (K) of the free end of the tube section (42) about the transverse bolt (44) and the latter is supported at the end of the elongated hole (43) of the tube section close to the stop web.

15. Body structure according to one of claims 12 to 14, characterised in that, in the rest position of the tube section (42), the transverse bolt (44) is supported at the end of the elongated hole (43) of the tube section remote from the stop web (50).

## Revendications

1. Structure pour la plate-forme de chargement d'un véhicule, comprenant au moins une paire de rails de guidage, disposés horizontalement sur les parois latérales à distance de la surface de chargement, ces rails étant susceptibles d'être reliés, du côté des extrémités, à des organes de liaison d'un élément de support courant entre eux, en position de service, et la longueur de l'élément de support qui est déplaçable localement par rapport aux rails de guidage correspondant sensiblement à la distance séparant les deux rails de guidage, caractérisée en ce que l'élément de support est réalisé sous la forme de tube de support ou de profilé de support (20, 34, 52), à distance (n) par rapport à une extrémité de profilé (48) avec au moins un bras du genre barre (42, 42a) relié par une articulation (43, 44), le bras étant monté à l'autre extrémité par l'intermédiaire d'une autre articulation (46, 47) sur l'un des rails de guidage (22), et en ce que le profilé de support (20, 34, 52) est réalisé en étant susceptible de se rabattre en pivotant autour de son articulation (44), de même que le bras (42, 42a) en pivotant autour de l'autre articulation (46, 47) pour passer de la position de service à une position de repos, ces éléments étant également susceptibles de coulisser sur le rail.

2. Structure selon la revendication 1, caractérisée en ce que l'autre articulation (46, 47) est fixée rigidement à un profilé (48) entourant partiellement le rail de guidage (22) et est prévue pour être fixée à ce rail.

3. Structure selon la revendication 1 ou 2, caractérisée en ce que le profilé de support (34), réalisé sous la forme d'un tube de support avec au moins un tube de support raccordé parallèlement, forme une poutre portante (20), et en ce que le bras du genre barre court sous la forme d'une pièce tubulaire (42) entre les deux tubes porteurs.

4. Structure selon la revendication i ou 2, caractérisée en ce que le profilé de support (52) est un profilé en caisson avec une ceinture supérieure (54) dépassant latéralement, et sur les parois latérales de profilé (53) duquel est articulé chaque fois l'un des bras (42a) du type barre.

5. Structure selon l'une des revendications 1 à 4, caractérisée en ce que, depuis le bras (42a) ou bien la pièce tubulaire (42), à leur extrémité éloignée du rail de guidage (22), fait saillie une broche transversale (44), qui est guidée comme axe d'articulation dans un trou oblong axial (43) du profilé de support (20, 34, 52), ou bien en ce qu'il est prévu dans le bras (42a) ou dans la pièce tubulaire (42), à leur extrémité éloignée du rail de guidage (22), un trou oblong (43) pour une broche transversale (44) du profilé de support (52) ou du (des) tube(s) de support (34).

6. Structure selon l'une des revendications 1 à 5, caractérisée en ce que le profilé de support (52) ou les tubes de support (34) comporte(nt) du côté de l'extrémité, comme organe de liaison, au moins un profilé en crochet (28, 28r) qui est prévu susceptible d'être inséré en position d'accrochage dans une rainure longitudinale (25) dirigée vers le haut de l'autre rail de guidage (22) et également sur au moins une broche télescopique (30) du profilé de support (52) ou du (des) tube(s) de support (34).

7. Structure selon la revendication 6, caractérisée en ce que la broche télescopique (30) est montée coulissante dans l'espace de caisson (58) du profilé de support (52), en particulier est reliée coulissante au profilé de support (52) ou au(x) tube(s) de support par un appairage du trou oblong (38, 38a) et de la broche transversale (40).

8. Structure selon l'une des revendications 2 à 7, caractérisée en ce que le rail de guidage (22) comporte deux rainures longitudinales (25) de sens opposé en section transversale, et en ce que le profilé (48) muni de l'articulation (46, 47) du bras (42a) ou de la pièce tubulaire. (42) s'engage dans ces rainures par une section transversale en forme de C.

9. Structure selon l'une des revendications 6 à 8, caractérisée en ce que, sur le profilé en crochet (28) de la broche télescopique (30) et/ou sur le profilé en forme de C (48) de la pièce tubulaire (42) ou du bras (42a), est prévue une broche mobile axialement (32) ou un crochet de fixation (60, 61) susceptible de basculer, et en ce que leur extrémité libre est susceptible de s'engager dans un alésage ou trou (24) du rail de guidage (22).

10. Structure selon la revendication 9, caractérisée en ce que le crochet de fixation (60, 61) ou la broche (32) sur le profilé (48) en forme de C de la pièce tubulaire (42) ou du bras (42a) traverse ce(s) dernier(s) pour constituer une broche de sécurité, et de préférence, le profilé en forme de C est flanqué des deux côtés par des profilés en crochet (28r).

11. Structure selon la revendication 10, caractérisée en ce que la broche de sécurité (42, 60, 61) sur la pièce tubulaire (42) ou sur le bras (42a), est poussée dans l'alésage (24) du rail de guidage (22) par un organe d'accumulation de force (31, 62).

12. Structure selon l'une des revendications 1 à 11, caractérisée en ce que la pièce tubulaire (42) ou le bras (42a) est susceptible de basculer de 180° à partir de la position de service entre les tubes support (34) ou sur le profilé de support (52) dans la position de repos, et en ce que son extrémité libre est susceptible d'être placée sur la barrette de butée (50) ou sur la ceinture supérieure (54).

13. Structure selon l'une des revendications 3 à 12, caractérisée en ce que, dans la position horizontale de service, la pièce tubulaire (42) est fixée rigidement aux deux axes d'articulation (44, 47) et en ce qu'au moins l'une des barrettes de butée (50) la recouvrant est fixée rigidement entre les tubes de support (34), parallèlement à cette barrette.

14. Structure selon la revendication 12 ou 13, caractérisée en ce que la barrette de butée (50) est prévue à l'extérieur d'un cercle de pivotement (K) de l'extrémité libre de la pièce tubulaire (42) autour de la broche transversale (44) et en ce que cette broche est engagée, à l'extrémité du trou oblong (43) de la pièce tubulaire, qui est proche de la barrette de butée.

15. Structure selon l'une des revendications 12 à 14, caractérisée en ce que, en position de repos de la pièce tubulaire (42), la broche transversale (44) s'engage à l'extrémité du trou oblong (43) de la pièce tubulaire, qui est éloignée de la barrette de butée (50).
